# DEMANDE DE BREVET EUROPEEN

(11) **EP 1 889 812 A1**
(43) Date de publication de la demande: **20.02.2008**
(21) Numéro de dépôt: 07356114.4
(22) Date de dépôt: 09.08.2007
(51) Int. Cl.: C02F 1/28, B01D 53/14, F01N 3/04, B01D 53/96

(54) **Procédé de filtration d'un liquide ayant servi à l'échappement d'un moteur diesel**

(30) Priorité: 11.08.2006 FR 0607296
(71) Demandeur: LAB SA, 69006 Lyon (FR)
(72) Inventeur: Siret, Bernard, 69200 Venissieux (FR); Tabaries, Franck, 83190 Ollioules (FR); Woillez, Jacques, 69006 Lyon (FR)
(74) Mandataire: Schouller, Jean-Philippe

(57) **Abrégé**

Selon ce procédé :
- on ajoute (par 6) au liquide à filtrer (5) un surfactant ionique, de sorte que les molécules de ce surfactant s'adsorbent à la surface des particules polluantes à capter, ce qui confère à l'ensemble formé par ces particules et ces molécules une charge électrique nette ; et
- on fait passer les eaux additionnées du surfactant dans un lit de filtration granulaire (103), constitué de granules d'un diamètre moyen compris entre 1 à 40 mm, selon une vitesse de filtration comprise entre 0.5 et 15 cm/s, ces granules ayant la capacité d'acquérir une charge de surface de signe opposé à ladite charge électrique nette, de manière à attirer et à maintenir les particules de polluants à la surface de ces granules.

## Description

La présente invention concerne un procédé pour l'épuration d'un liquide ayant servi au lavage des gaz et des fumées, et particulièrement aux fumées résultant de la combustion d'un moteur diesel.

Les moteurs diesels, et en particulier ceux destinés à la propulsion marine, utilisent une variété de combustibles plus ou moins chargés en impuretés, passant du fuel numéro 2 au fuel lourd (dit HFO ou heavy fuel oil), par exemple. Ainsi, la teneur en soufre dans ces carburants peut varier de 0.05% à 5%. Lors de la combustion, ce soufre se transforme en dioxyde de soufre SO₂ et partiellement en trioxyde de soufre. Pour des raisons environnementales, on est amené à traiter ce rejet gazeux et plusieurs brevets existent à ce sujet. A cet égard, on peut citer WO-A-03/045524, DE-A-4000966 ou encore WO-A-04/067926.

Un procédé courant est d'utiliser un laveur humide, qui utilise ou bien l'alcalinité de l'eau de mer, ou bien l'alcalinité apportée par un réactif pour capter les oxydes de soufre dans l'eau. Ces oxydes de soufre se retrouvent dans l'eau sous forme de sulfites et de sulfates, puis sont ultimement oxydés en sulfates, composants naturels de l'eau de mer, et ne représentent donc pas un risque environnemental. En revanche la combustion d'un moteur diesel produit aussi une certaine quantité de polluants, tels notamment des suies, des goudrons et des composés particulaires qui, pour leur part, présentent un risque environnemental qu'il faut traiter.

En outre, les particules solides concentrent les métaux lourds comme le vanadium, présent dans le fuel, ce qui en accroit la nocivité. Les laveurs sont efficaces pour capter les particules solides, et en particulier celles de suies, mais retirent des particules des gaz à traiter pour les transférer au liquide ayant servi au lavage, qui est en général de l'eau. On se retrouve donc dans le cadre d'un transfert de pollution, en ayant éliminé les particules du flux gazeux pour les apporter au flux liquide.

Pour remédier à cette situation, il a été proposé d'utiliser des hydrocyclones pour collecter les particules nocives dans le liquide, mais cette solution souffre de plusieurs inconvénients. Tout d'abord, le pouvoir de coupure d'un hydrocyclone est en général assez mauvais, sauf à accepter une perte de charge importante, ce qui se traduit par une consommation énergétique très pénalisante pour un navire. En outre, environ 10% du flux va concentrer les impurétés enlevées, en sous verse ou en surverse.

La présente invention vise à proposer un procédé permettant de remédier à ces inconvénients.

A cet effet, elle a pour objet un procédé de filtration d'un liquide ayant servi à l'épuration par voie humide des fumées d'échappement d'un moteur diesel, ce liquide contenant des particules de polluants tels que des suies, des goudrons et des composés particulaires, caractérisé en ce que :
- on ajoute au liquide à filtrer un surfactant ionique, de sorte que les molécules de ce surfactant s'adsorbent à la surface des particules polluantes à capter, ce qui confère à l'ensemble formé par ces particules et ces molécules une charge électrique nette ; et
- on fait passer le liquide additionné du surfactant dans un lit de filtration granulaire, formé de granules d'un diamètre moyen compris entre 1 à 40 mm, selon une vitesse de filtration comprise entre 0.5 et 15 cm/s, ces granules ayant la capacité d'acquérir une charge de surface de signe opposé à ladite charge électrique nette, de manière à attirer et à maintenir les particules de polluants à la surface de ces granules.

Selon d'autres caractéristiques de l'invention
- les granules du lit de filtration sont formées de carbonate de calcium, de verre ou de quartz ;
- les granules du lit de filtration sont des billes ;
- le surfactant est de type anionique ou cationique ;
- les granules présentent un diamètre moyen compris entre 4 et 30 mm;
- on fait passer le liquide additionné du surfactant dans le lit de filtration à une vitesse comprise entre 2 et 10 cm/s ;
- le liquide ayant servi à l'épuration par voie humide des fumées d'échappement est de l'eau de mer
- on réalise la régénération du lit de filtration en altérant la condition d'ionisation du surfactant, notamment par élévation ou baisse du pH du lit, de façon à faire perdre sa charge électrique à la queue hydrophile de ce surfactant.

L'invention va être décrite ci-après, en référence aux dessins annexés, donnés uniquement à titre d'exemple non limitatif, dans lesquels :

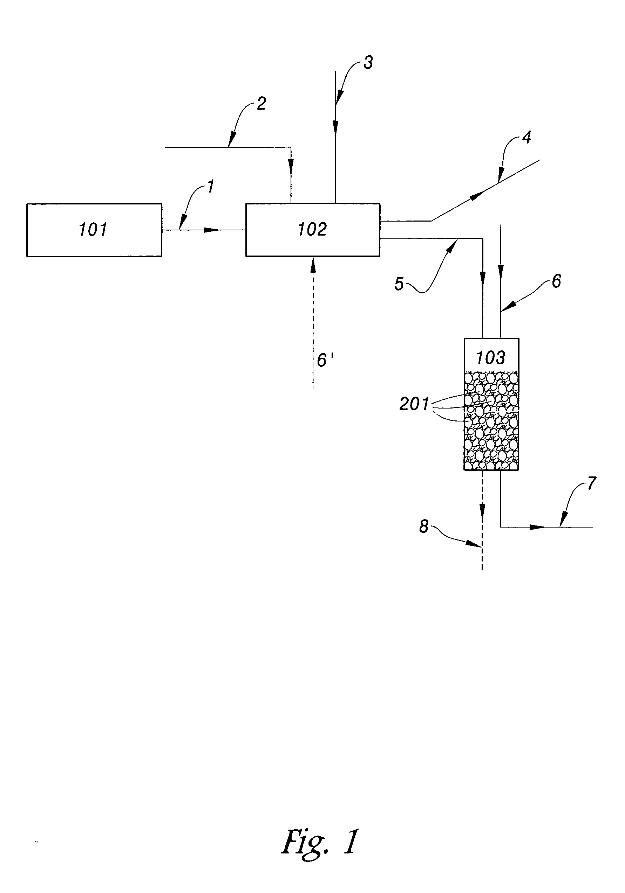

- la figure 1 est une vue schématique, illustrant la mise en oeuvre d'un procédé de filtration conforme à l'invention ; et
- la figure 2 est une vue schématique, à bien plus grande échelle, illustrant le mécanisme d'attraction et de maintien de particules de polluants à la surface de granules, dont tire parti l'invention.

Les fumées (1) issues de la combustion d'un moteur à explosion 101 sont amenées à un laveur humide 102 non objet de l'invention. Ces fumées (1) contiennent une certaine quantité de particules de polluants telles que notamment des suies, des goudrons et des composés particulaires qu'il s'agit de traiter. A cet effet, un liquide de lavage (2), pouvant être de l'eau de mer, est alimenté au laveur 102. De manière optionnelle des réactifs additionnels sont alimentés par (3).

Les gaz d'échappement épurés (4) sont rejetés tandis le liquide de lavage usé (5), constitué par exemple d'eau de mer ayant collecté le SO₂ et les particules de suie, est admis dans un lit granulaire 103, contenant des granules d'un matériau filtrant pouvant être par exemple du carbonate de calcium, du quartz, ou encore du verre. Ces granules sont susceptibles de présenter toutes formes appropriées, en particulier une forme sphérique, de sorte que ces granules sont alors des billes.

On choisira une taille moyenne des solides compatible avec une perte de charge assez faible et une efficacité d'interception suffisante. Dans la pratique on choisit un diamètre équivalent compris entre 1 et 40 mm, de préférence entre 4 et 30 mm. Un flux (6) d'un agent surfactant, dont les molécules présentent de manière connue en soi une extrémité hydrophobe et une autre extrémité susceptible d'acquérir une charge électrique, est mélangé au flux (5). Selon l'invention, et en fonction de la nature du solide contenu dans le lit 103, cet agent surfactant peut être un tensioactif cationique, anionique, ou amphothère. Selon une variante de l'invention, l'agent surfactant peut être introduit directement dans le laveur 102, selon la ligne 6' représentée en traits pointillés.

Il est connu que les solides, en milieu aqueux, vont développer des charges de surface. Ainsi la silice acquiert des charges négatives par déprotonation des groupes silanol qui sont présents en surface par la réaction : SiOH → SiO- + H+. Similairement des charges positives vont se développer à la surface de grains de calcaire. Ce mécanisme est décrit par exemple dans " Final technical report, demonstration project for arsenic removal from drinking water at Keystone, South Dakota, march 15, 2005" et " Field test of limestone as a treatment medium for groundwater at the Savannah river Site, WSRC-MS-2001-00281 ".

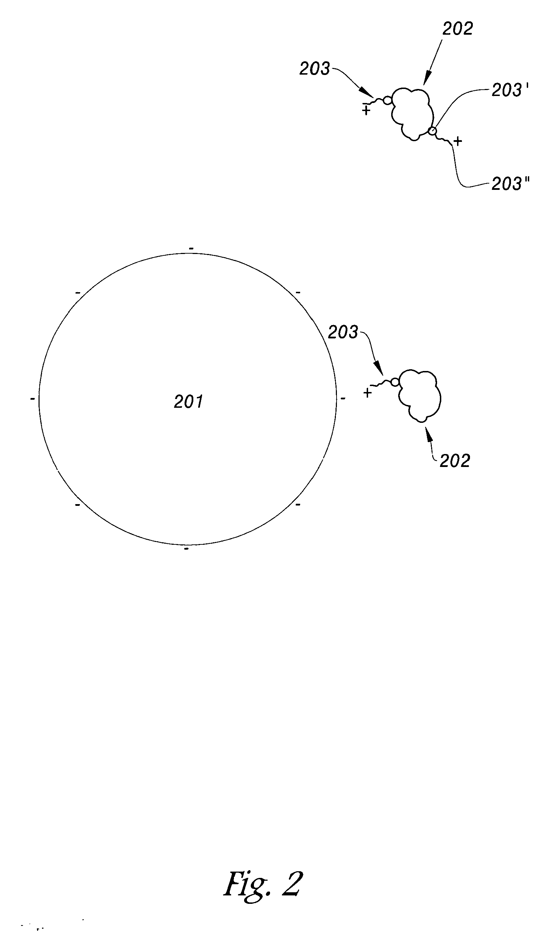

La figure 2 aide à comprendre ce qui se passe quand on ajoute un surfactant. Les têtes hydrophobes 203' des molécules de surfactant 203 vont se coller à la particule de polluant, en l'occurrence de suie 202, tandis que les queues 203", ici représentées comme chargées positivement, vont entourer la particule 202. L'ensemble formé de la particule 202 et de la molécule de surfactant 203 possède donc une charge électrique nette positive. Le matériau granulaire du lit filtrant 201, ici représenté comme ayant une charge de surface négative dans le cas de la silice ou du verre, va alors attirer la particule de suie chargée, et après le contact la maintenir arrimée.

Ainsi, par rapport à une situation où on ne compterait que sur l'effet d'interception par simple choc d'une petite particule par une plus grosse, effet bien décrit dans la littérature mais d'efficacité très limitée, la mise en application de l'invention accroît la probabilité d'interception car les charges opposées vont s'attirer. Par ailleurs, une fois interceptée, la particule arrimée par le jeu de charges décrit ci-dessus risque moins de se détacher que dans le cas d'une simple interception.

Ainsi, l'efficacité est globalement très améliorée.

On choisit une vitesse de filtration aussi élevée que possible de façon à minimiser la taille du filtre 103, mais tout en gardant une perte de charge inférieure à quelques bars. On choisira avantageusement une vitesse d'écoulement du flux 5 dans le lit 103 qui est comprise entre 0.5 et 15 cm/s, de préférence entre 2 et 10 cm/s. La ligne 7 représente la sortie des zones ainsi filtrées.

Selon l'invention, quand le lit de solide devient saturé, il suffit pour le désorber d'altérer le bilan de charges autour du surfactant. Ceci peut s'obtenir, par exemple, en induisant une forte variation de pH par ajout d'un acide fort ou d'une base forte par la ligne (6), qui va faire disparaître la charge de la queue hydrophile du surfactant. La particule de suie perd ainsi sa capacité d'ancrage et se trouve relarguée, puis récupérée par le flux de purge (8).

## Revendications

1. Procédé de filtration d'un liquide (5) ayant servi à l'épuration par voie humide des fumées (1) d'échappement d'un moteur diesel, ce liquide contenant des particules de polluants tels que des suies, des goudrons et des composés particulaires, **caractérisé en ce que** :
- on ajoute (par 6) au liquide à filtrer (5) un surfactant ionique (203), de sorte que les molécules (203) de ce surfactant s'adsorbent à la surface des particules polluantes à capter (202), ce qui confère à l'ensemble (202, 203) formé par ces particules et ces molécules une charge électrique nette ; et
- on fait passer le liquide additionné du surfactant dans un lit de filtration granulaire (103), formé de granules (201) d'un diamètre moyen compris entre 1 à 40 mm, selon une vitesse de filtration comprise entre 0.5 et 15 cm/s, ces granules (201) ayant la capacité d'acquérir une charge de surface de signe opposé à ladite charge électrique nette, de manière à attirer et à maintenir les particules de polluants à la surface de ces granules.

2. Procédé de filtration selon la revendication 1, **caractérisé en ce que** les granules (201) du lit de filtration (103) sont formées de carbonate de calcium, de verre ou de quartz.

3. Procédé de filtration selon la revendication 1 ou 2, **caractérisé en ce que** les granules (201) du lit de filtration (103) sont des billes.

4. Procédé d'épuration selon l'une quelconque des revendications précédentes, **caractérisé en ce que** le surfactant (203) est de type anionique ou cationique.

5. Procédé d'épuration selon l'une quelconque des revendications précédentes, **caractérisé en ce que** les granules (201) présentent un diamètre moyen compris entre 4 et 30 mm.

6. Procédé d'épuration selon l'une quelconque des revendications précédentes, **caractérisé en ce qu'**on fait passer le liquide (5) additionné du surfactant (203) dans le lit de filtration (103) à une vitesse comprise entre 2 et 10 cm/s.

7. Procédé d'épuration selon l'une quelconque des revendications précédentes, **caractérisé en ce que** le liquide ayant servi à l'épuration par voie humide des fumées d'échappement est de l'eau de mer.

8. Procédé d'épuration selon l'une quelconque des revendications précédentes, **caractérisé en ce qu'**on réalise la régénération du lit de filtration (103) en altérant la condition d'ionisation du surfactant (203), notamment par élévation ou baisse du pH du lit, de façon à faire perdre sa charge électrique à la queue hydrophile (203") de ce surfactant.
